# EUROPÄISCHE PATENTSCHRIFT

(11) **EP 0 732 860 B1**
(45) Veröffentlichungstag und Bekanntmachung des Hinweises auf die Patenterteilung: **23.07.2003**
(21) Anmeldenummer: 96103193.7
(22) Anmeldetag: 01.03.1996
(51) Int. Cl.: H04Q 3/545

(54) **Verfahren zum Abspeichern von Systemdaten eines Kommunikationssystems**
Method for recording system data of a communication system
Procédé d'enregistrement de données de système d'un système de communication

(30) Priorität: 16.03.1995 DE 19509603
(43) Veröffentlichungstag der Anmeldung: 18.09.1996
(73) Patentinhaber: SIEMENS AKTIENGESELLSCHAFT, 80333 München (DE)
(72) Erfinder: Peifer, Hans-Jürgen, 81475 München (DE); Hammerschick, Andreas, Dipl.-Math., 80689 München (DE); Ahlers, Claus, Dipl.-Math., 81477 München (DE)

(56) Entgegenhaltungen:
- DE-A- 3 937 532
- US-A- 4 866 610
- PATENT ABSTRACTS OF JAPAN vol. 095, no. 008, 29. September 1995 (1995-09-29) & JP 07 121465 A (HITACHI LTD), 12. Mai 1995 (1995-05-12)

## Beschreibung

Die Erfindung betrifft ein Verfahren gemäß dem Oberbegriff des Patentanspruchs 1. Ein derartiges Verfahren ist bekannt aus der Patentschrift DE 39 37 532.

In Kommunikationssystemen müssen zur Abwicklung der anfallenden Steuer-und Schaltvorgänge Systemdaten zwischengespeichert werden.Dabei handelt es sich beispielsweise um Zustandsdaten, die Auskunft über den aktuellen Zustand des Kommunikationssystems geben. In der Regel werden diese Vorgänge über zum Teil umfangreiche Tabellen vorgenommen. Dabei schreiben mehrere Einrichtungen des Kommunikationssystems bzw. die diese steuernden Programme ihre Systemdaten in die Felder der zu diesem Zweck vorgesehenen Tabellen ein; gleichzeitig oder zu einem späteren Zeitpunkt werden diese Systemdaten dann von weiteren Programmen ausgelesen und weiterverarbeitet. Im Zuge eines immer höher auftretenden Durchsatzes derartiger Systemdaten tritt insbesondere das Problem auf, wie solche Tabellen zu dimensionieren sind.

Eine beim Stand der Technik häufig verwendete Möglichkeit besteht darin,bereits in der Codierungsphase festzulegen,welche Systemdaten in welchen Feldern der Tabellen abgespeichert werden sollen. Problematisch daran ist, daß damit bereits in diesem Stadium eine umfangreiche Koordination der einzelnen, die Tabelle beschreibenden Programme unerläßlich ist, was in der Regel einen zusätzlichen Mehraufwand bedingt. Außerdem müssen für die zu einem späteren Zeitpunkt noch hinzukommende weiteren Programme noch genügend Speicherplatzreserven verfügbar sein, damit diese weitere Systemdaten zwischenspeichern können. Damit wird aber unnötig Seicherplatz gebunden.

Eine weitere Möglichkeit, derartige Probleme zu umgehen, besteht darin, den Programmen, die auf derartige Tabellen zugreifen eine Einfügeprozedur bereits während der Codierungsphase zuzuweisen. In diesem Fall werden beim späteren Ablauf dieser Programme dieselben aufgerufen und mit den entsprechenden Systemdaten versorgt. Die Einfügeprozeduren greifen dann auf die betreffenden Felder der Tabellen zu und speichern die Systemdaten ab. Damit tritt aber hier das Problem auf, daß das Aufrufen der Einfügeprozeduren durch die Programme koordiniert werden muß, da ein gleichzeitiges Zugreifen zweier oder mehrerer Prozeduren auf dasselbe Feld einer Tabelle vermieden werden muß. Eine derartige Koordinierung erfordert aber weitere Programme und Prozeduren sowie auch zusätzlichen Speicherplatz. Insofern ist mit einem derartigen Lösungsvorschlag zwangsläufig ein Dynamikverlust beim Ablauf der gesammten Software verbunden.

Der Erfindung liegt die Aufgabe zugrunde, einen Weg aufzuzeigen, wie Systemdaten speicherplatzeffizient in Tabellen zwischengespeichert werden können ohne damit die Dynamik des Kommunikationssystems einzuschränken.

Die Erfindung wird, ausgehend vom Oberbegriff des Patentanspruchs 1 durch dessen kennzeichnende Merkmale gelöst.

Vorteilhaft an der Erfindung ist insbesondere, daß eine oder mehrere Tabellen erst während des Generierungsvorganges der das Kommunikationssystem steuernden Programme erstellt werden.Zu diesem Zweck wird vor dem Generierungsvorgang eine Generierungsreihenfolge der Module eines Programms festgelegt. Dabei wird der Modul, der die wenigstens eine Tabelle aufweist, in der Generierungsreihenfolge an die letzte Stelle vor den Modulen mit Lesezugriff plaziert. Dies bedeutet, daß dieser Modul als letzter generiert wird. Damit ist der Vorteil verbunden, daß in dieser Phase eine speicheroptimierte Dimensionierung möglich ist. Ebenso sind keine Einfügeprozeduren nötig, die Systemdaten in die Felder der Tabelle einschreiben bzw. auslesen, was keine Einschränkung im Hinblick auf die Dynamik bedingt. Ein weiterer Vorteil ist damit verbunden,daß möglicherweise auftretende Fehler - wie beispielsweise ein gleichzeitiges Zugreifen mehrerer Module auf dieselben Felder - bereits frühzeitig, nämlich während der Generierungsphase ermittelbar sind. Damit können dieselben noch mit relativ einfachen Mitteln und schnell behoben werden. Beim Stand der Technik treten diese Fehler hingegen erst später - nämlich während des Ablaufs der Programme - in Erscheinung. In der Praxis bedeutet dies eine wartungsfreundliche Software.

Vorteilhafte Ausgestaltungen der Erfindung sind in den Unteransprüchen angegeben.

Gemäß Anspruch 2 ist vorgesehen, daß die Einträge in der gesonderten Tabelle Systemdaten und Adressen definieren.

Gemäß Anspruch 3 ist vorgesehen,daß die Systemdaten Zustandsdaten des Kommunikationssystems und/oder teilnehmerbezogene Daten sind. Damit ist der Vorteil verbunden, daß auch für andere Datentypen ein speicheroptimiertes Zwischenspeichern möglich ist.

Die Erfindung wird im folgenden anhand eines Ausführungsbeispiels näher erläutert.

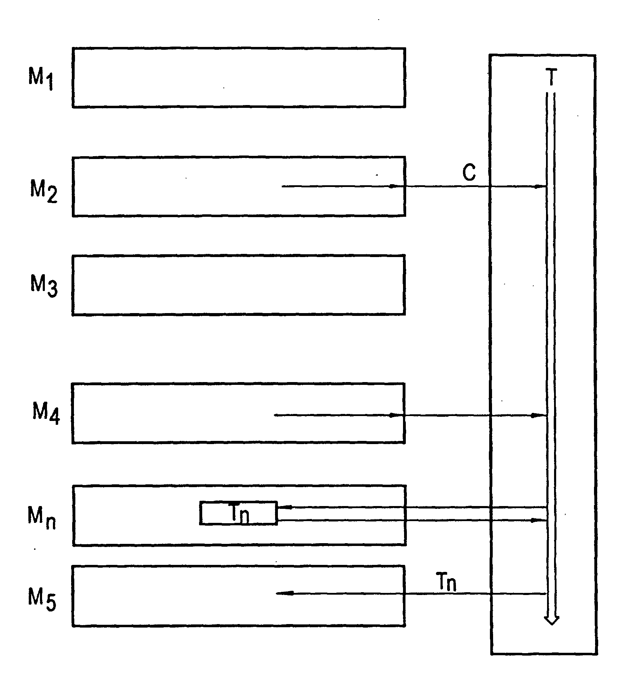

In der Figur sind Module M₁...Mₙ aufgezeigt, wobei ein Modul jeweils eine bestimmte Anzahl von Programmschritten beinhaltet. Für n = 5 sind dies die Module M₁ ... M₅. Weiterhin ist eine Tabelle T definiert, die von einer Generierungsprozedur C angelegt wird. Die Systemdaten sollen in bei dem vorliegenden Ausführungsbeispiel einer Tabelle Tₙ des Moduls Mₙ zwischengespeichert werden. Im folgenden soll davon ausgegangen werden, daß die Module M₂ und M₄ Schreib-/ Lese-Operationen von Systemdaten in den Tabelle Tₙ durchführen.

Zu diesem Zweck wird vor dem Generierungsvorgang zunächst eine Generierungsreihenfolge festgelegt. Diese Festlegung erfolgt durch die Prozedur C oder gegebenenfalls eine Sonderprozedur. Dabei wird der Modul, der die Tabelle Tₙ aufweist, an die letzte Stelle in der Reihenfolge plaziert.

Nach dem Festlegen der Reihenfolge werden die Module M₁ bis Mₙ₋₁ durch die in der Prozedur C festgelegte Reihenfolge generiert. Im vorliegenden Ausführungsbeispiel wird also der Generierungsvorgang mit Modul M₁ gestartet. Während des Generierungsvorganges wird von der Prozedur C ermittelt, ob Zugriffe im Sinne von Schreib-Lese-Operationen von dem aus Modul M₁ generierten Programm auf die Tabelle Tₙ erfolgen sollen. Dies ist in vorliegendem Ausführungsbeispiel nicht der Fall. Insofern wird von der Prozedur C auch kein Eintrag in der Tabelle T (die die Funktion einer Datenbasis aufweist) vorgenommen.

Nachdem der Generierungsvorgang von Modul M₁ beendet ist, wird von der Prozedur C der Modul M₂ generiert. In vorliegendem Ausführungsbeispiel wird davon ausgegangen, daß von hier Schreib-Operationen in der Tabelle Tₙ des Moduls Mₙ durchgeführt werden sollen. Dieser Umstand wird von der Prozedur C verifiziert und daraufhin ein Eintrag in der Tabelle T durchgeführt. In entsprechender Weise werden von der Prozedur C die übrigen Module M₃ bis Mₙ₋₁ generiert.

Sind die Module M₁ bis Mₙ₋₁ generiert, so weist die Tabelle T alle die Einträge auf, wo Schreib-Lese-Operationen durchgeführt werden sollen. Als letzten Schritt wird nun der Modul Mₙ umgesetzt. Die Prozedur C entnimmt nun der Tabelle T alle Einträge und formt mit diesen Informationen die Tabelle Tₙ. Damit ist der Vorteil verbunden, daß die Tabelle Tₙ zum einen bezüglich des verwendeten Speicherplatzes nicht überdimensioniert werden muß, da alle Einträge bekannt sind. Weiterhin ist mit einer derartigen Vorgehensweise ein besonderer Dynamikgewinn verbunden. Mögliche Fehler werden im Übrigen schon während der Generierungsphase ermittelt und sind demzufolge bereits frühzeitig korrigierbar. Dies ist ein wesentlicher Vorteil gegenüber dem Stand der Technik,da hier Fehler erst später während des Ablaufs der bereits generierten Programme ermittelt werden können.

Abschließend sei noch angemerkt, daß die Erfindung nicht allein auf Systemdaten von Kommunikationssystemen anwendbar ist. So können ebenso andere Datentypen wie beispielweise Kundendaten in entsprechender Weise speicherplatzeffizient verwaltet werden.

Abschließend sei noch vermerkt, daß in vorliegendem Ausführungsbeispiel lediglich eine Tabelle Tₙ angesprochen ist. Dies bedeutet jedoch keine Einschränkung, da auch eine Mehrzahl von Tabellen mit dem erfindungsgemäßen Verfahren generiert werden können.

## Patentansprüche

1. Verfahren zum Abspeichern von Systemdaten eines Kommunikationssystems, mit
einer Mehrzahl von Modulen (M₁...Mₙ), die mittels einer einen Generierungsvorgang definierenden Prozedur (C) in Programme umgesetzt werden, die nach dem Generierungsvorgang während ihres Ablaufes Scheib/Leseoperationen von Systemdaten in wenigstens einer Tabelle (Tₙ) durchführen,
**dadurch gekennzeichnet,**
**daß** vor dem Generierungsvorgang eine Generierungsreihenfolge der Module (M₁...Mₙ) festgelegt wird,
**daß** der in der Generierungsreihenfolge an letzter Stelle vor den Modulen mit Lesezugriff stehende Modul(Mₙ) die wenigstens eine Tabelle (Tₙ) aufweist,
**daß** während des Generierungsvorganges der sich von dem die wenigstens eine Tabelle (Tₙ) aufweisenden Moduls (Mₙ) unterscheidenden Module (M₁...Mₙ₋₁) von der Prozedur (C) Einträge in einer gesonderten Tabelle (T) vorgenommen werden, die Auskunft darüber geben, welcher dieser Module (M₁...Mₙ₋₁) Schreib/ Leseoperationen in der wenigstens einen Tabelle (Tₙ) durchführen wird und welche Felder der wenigstens einen Tabelle (Tₙ) beschrieben werden sollen, und daß vor dem Generierungsvorgang des die wenigstens eine Tabelle (Tₙ) aufweisenden Moduls (Mₙ) die Einträge der gesonderten Tabelle (T) entnommen und damit die wenigstens eine Tabelle (Tₙ) erstellt wird.

2. Verfahren nach Anspruch 1
**dadurch gekennzeichnet,**
**daß** die Einträge in der gesonderten Tabelle (T) Systemdaten und Adressen definieren.

3. Verfahren nach Anspruch 1 oder 2
**dadurch gekennzeichnet,**
**daß** die Systemdaten Zustandsdaten des Kommunikationssystems und/oder teilnehmerbezogene Daten sind.

## Claims

1. Method for storing system data for a communication system, having
a plurality of modules (M₁...Mₙ) which are converted, using a procedure (C) which defines a generating process, into programs which, during their execution, perform read/write operations on system data in at least one table (Tₙ) following the generating process,
**characterized**
**in that** an order of generation for the modules (M₁...Mₙ) is stipulated before the generating process,
**in that** the module (Mₙ) which is in the last position ahead of the modules with read access in the order of generation has the at least one table (Tₙ),
**in that**, during the generating process for the modules (M₁...Mₙ₋₁) which differ from the module (Mₙ) having the at least one table (Tₙ), the procedure (C) makes entries in a separate table (T) which provide information about which of these modules (M₁...Mₙ₋₁) will perform read/write operations in the at least one table (Tₙ) and which fields in the at least one table (Tₙ) are to have information written to them, and
**in that**, before the generating process for the module (Mₙ) which has the at least one table (Tₙ), the entries in the separate table (T) are removed and are used to create the at least one table (Tₙ).

2. Method according to Claim 1,
**characterized**
**in that** the entries in the separate table (T) define system data and addresses.

3. Method according to Claim 1 or 2,
**characterized**
**in that** the system data are state data for the communication system and/or subscriber-related data.

## Revendications

1. Procédé d'enregistrement de données de système d'un système de communication, comprenant une pluralité de modules (M₁...Mₙ), convertis au moyen d'une procédure(C) définissant une opération de génération en programmes, qui, après l'opération de génération exécutent pendant leur passage des opérations d'écriture/lecture dans au moins une table (Tₙ),
**caractérisé en ce que** avant l'opération de génération une chronologie de la génération des modules (M₁...Mₙ) est définie, **en ce que** le module se trouvant à la dernière position dans la chronologie de la génération avant les modules (Mₙ) avec accès de lecture comprend l'au moins une table (Tₙ),
**en ce que** pendant l'opération de génération des modules (M₁...Mₙ₋₁) qui se différencie du module (Mₙ) comportant l'au moins une table (Tₙ), des entrées sont effectuées par la procédure (C) dans une table séparée (T) qui indique lequel de ces modules (M₁...Mₙ₋₁) effectuera des opérations d'écriture/lecture dans l'au moins une table (Tₙ) et quels champs de l'au moins une table (Tₙ) doivent être écrits, et
**en ce que** avant l'opération de génération du module (Mₙ) présentant l'au moins une table (Tₙ) les entrées de la table (T) séparées sont prélevées et l'au moins une table (Tₙ) est ainsi créée.

2. Procédé selon la revendication 1
**caractérisé en ce que** les entrées dans la table (T) spéciale définissent des données de système et des adresses.

3. Procédé selon la revendication 1 ou 2
**caractérisé en ce que** les données de système sont des données d'état du système de communication et/ou des données d'abonnés.
